# EUROPÄISCHE PATENTSCHRIFT

(11) **EP 3 530 098 B1**
(45) Veröffentlichungstag und Bekanntmachung des Hinweises auf die Patenterteilung: **07.02.2024**
(21) Anmeldenummer: 18211546.9
(22) Anmeldetag: 11.12.2018
(51) Int. Cl.: A01D 41/127

(54) **VERFAHREN ZUR ERMITTLUNG DER BESTANDSDICHTE EINES FELDBESTANDS**
METHOD FOR DETERMINING THE DENSITY OF A CROP
PROCÉDÉ DE DÉTERMINATION DE LA DENSITÉ DE PÂTURAGE D'UNE CULTURE

(30) Priorität: 23.02.2018 DE 102018104205
(43) Veröffentlichungstag der Anmeldung: 28.08.2019
(73) Patentinhaber: CLAAS Selbstfahrende Erntemaschinen GmbH, 33428 Harsewinkel (DE)
(72) Erfinder: Redenius, Jannik, 32361 Pr. Oldendorf (DE); Krause, Thilo, 39249 Glinde (DE)

(56) Entgegenhaltungen:
- EP-A1- 2 517 549
- EP-A1- 2 586 286
- EP-A1- 3 132 665
- EP-A1- 3 165 062

## Beschreibung

Die vorliegende Erfindung betrifft ein Verfahren zur Ermittlung der Bestandsdichte eines Feldbestands aus einer Mehrzahl von Pflanzen gemäß dem Oberbegriff von Anspruch 1 sowie eine Erntemaschine zur Durchführung eines solchen Verfahrens gemäß Anspruch 15.

Landwirtschaftliche Erntemaschinen, zu denen insbesondere selbstfahrende Erntemaschinen wie Mähdrescher zählen, weisen regelmäßig verschiedene Arbeitsaggregate auf, die bei der Verarbeitung von Erntegut mit wechselnden Parametern betrieben werden können. Für einen optimalen Betrieb empfiehlt es sich, die Ansteuerung der Arbeitsaggregate in Abhängigkeit von verschiedenen Randbedingungen einzustellen, wozu insbesondere die Bestandsdichte des abzuerntenden Feldbestands zählt. Die sensorgestützte Ermittlung einer Führungsgröße, wie etwa der Bestandsdichte des abzuerntenden Feldbestands steht vorliegend im Vordergrund.

Das bekannte Verfahren (DE 10 2008 043 716 A1), von dem die Erfindung ausgeht, dient der Ermittlung der Bestandsdichte eines von einer Erntemaschine abzuerntenden Feldbestands, indem mittels einer Sensoranordnung periodisch Sendepulse aus elektromagnetischen in verschiedenen Senderichtungen auf den Feldbestand ausgesendet werden. Die Sendepulse werden am Feldbestand reflektiert und als Echopulse von der Sensoranordnung empfangen. Dadurch, dass die Strahldivergenz der Sendestrahlen gering ist, ergibt sich im Bereich der Pflanzen ein entsprechend geringer Strahlquerschnitt. Aus der Laufzeit der Sendepulse zu den Echopulsen ergibt sich der Abstand zwischen der Sensoranordnung und der reflektierenden Pflanze. Je nachdem, ob ein Sendestrahl an einer vorderen Pflanze reflektiert wird oder an den vorderen Pflanzen vorbei auf eine bestandsinnere Pflanze trifft und von dieser reflektiert wird, ergeben sich unterschiedliche Abstandswerte. Aus der statistischen Verteilung der ermittelten Abstandswerte, insbesondere aus der Standardabweichung für die Abstandswerte, lässt sich ein Wert für die Bestandsdichte ermitteln. Nachteilig bei diesem Verfahren ist die Notwendigkeit der Durchführung einer Vielzahl von Messungen, bevor überhaupt ein Wert für die Bestandsdichte mit akzeptabler Genauigkeit geschätzt werden kann.

Ähnlich ist es bei dem in der EP 1 271 139 A2 offenbarten Verfahren zur Ermittlung der Bestandsdichte, bei dem die Intensität der Echosignale, also die Strahlleistung der Echosignale, ein Indiz für die Bestandsdichte des Feldbestands bereitstellen sollen.

In EP 2 517 549 wird ein Verfahren zur Ermittlung der Bestandsdichte eines von einer Erntemaschine abzuerntenden Feldbestands aus einer Mehrzahl von Pflanzen nach dem Oberbegriff von Patentanspruch 1 offenbart.

Der Erfindung liegt das Problem zu Grunde, das bekannte Verfahren derart auszugestalten und weiter zu bilden, dass die Bestandsdichte mit reduziertem steuerungstechnischem Aufwand bei erhöhter Genauigkeit ermittelt wird.

Das obige Problem wird bei einem Verfahren gemäß dem Oberbegriff von Anspruch 1 durch die Merkmale des kennzeichnenden Teils von Anspruch 1 gelöst.

Wesentlich ist die Grundsätzliche Erkenntnis, dass mit einem einzigen Sendestrahl mehrere Teil-Echopulse erzeugbar sind, aus denen sich der resultierende Echopuls zusammensetzt. Dies geht auf eine Mehrfachreflexion des jeweiligen Sendestrahls zurück, nämlich einerseits an einer vorderen Pflanze und andererseits an mindestens einer bestandsinneren Pflanze. Hierfür ist der Sendestrahl mit einer relativ großen Strahldivergenz auszustatten, so dass sich der Sendestrahl in unterschiedliche Teilstrahlen aufteilen kann. Die Teilstrahlen ergänzen sich hier zu dem Strahlquerschnitt des Sendestrahls. Die unterschiedlichen Teilstrahlen werden zueinander zeitversetzt an hintereinanderliegenden Pflanzen des Feldbestands reflektiert, so dass sich der jeweils resultierende Echopuls aus entsprechend zeitversetzten Teil-Echopulsen zusammensetzt.

Vorschlagsgemäß ist weiter erkannt worden, dass diese zeitversetzte Reflexion, die sich in dem zeitlichen Verlauf des resultierenden Echopulses niederschlägt, Aufschluss über die Bestandsdichte geben kann. Entsprechend wird vorschlagsgemäß ganz allgemein vorgeschlagen, dass mittels der Steuerungsanordnung basierend auf einem zeitlichen Zusammenhang innerhalb des resultierenden Echopulses ein Wert für die Bestandsdichte ermittelt wird.

Mit der vorschlagsgemäßen Lösung lässt sich ein Wert für die Bestandsdichte bereits aus einer einzigen Messung, also mittels eines einzigen Sendepulses, ermitteln. Dies liegt daran, dass die Mehrfachreflexion des Sendepulses Aufschluss über die Eindringlänge des Sendestrahls in den Feldbestandteil liefert, von der sich ein Wert für die Bestandsdichte des Feldbestands ableiten lässt. Damit kann die Anzahl der für die Ermittlung der Bestandsdichte notwendigen Messungen reduziert werden. Gleichzeitig ist das vorschlagsgemäße Verfahren relativ genau, da die Ermittlung des Wertes für die Bestandsdichte nicht notwendiger Weise auf eine Mittelwertbildung über mehrere Messungen zurückgehen muss.

Es darf darauf hingewiesen werden, dass der Begriff "Echopuls" vorliegend weit zu verstehen ist. Darunter ist nicht nur ein zusammenhängender Echopuls, sondern auch ein sich aus mehreren Teilpulsen zusammensetzender Echopuls zu verstehen.

Bei der besonders bevorzugten Ausgestaltung gemäß Anspruch 2 ist der zeitliche Zusammenhang, der der Ermittlung des Wertes für die Bestandsdichte zu Grunde liegt, ein Zeitversatz zwischen zwei Teil-Echopulsen, die auf ein und demselben Sendepuls zurückgehen. Bei dem Zeitversatz kann es sich beispielsweise um die Pulsbreite des resultierenden Echopulses handeln, die gemäß Anspruch 3 vorzugsweise die Gesamtbreite des resultierenden Echopulses im Zeitbereich repräsentiert.

Bei der weiter bevorzugten Ausgestaltung gemäß Anspruch 4 wird der Zeitversatz ermittelt, indem von der Pulsbreite des resultierenden Echopulses eine Normierungsbreite subtrahiert wird, die die Breite des Echopulses im Zeitbereich im Falle einer Einmalreflexion repräsentiert. Damit entspricht der Zeitversatz der jeweiligen Eindringtiefe des Sendestrahls in den Feldbestand hinein. Die Eindringtiefe lässt sich aus dem so ermittelten Zeitversatz nämlich berechnen, indem der Zeitversatz mit der Ausbreitungsgeschwindigkeit der Sendestrahlen multipliziert wird. Der Kehrwert der Eindringtiefe ist dann proportional zu der Bestandsdichte, was Gegenstand von Anspruch 5 ist.

Die weiter bevorzugten Ausgestaltungen gemäß den Ansprüchen 6 und 7 betreffen die Auslegung des Sendestrahls mit einem vergleichsweise großen Strahlquerschnitt, so dass eine Mehrfachreflexion des Sendepulses an unterschiedlichen Pflanzen des Feldbestandes unterstützt wird. Gemäß Anspruch 7 ist der resultierende Messfleck des Sendestrahls so groß, dass Teilstrahlen an einer den Sendestrahl reflektierenden Pflanze vorbei auf eine nachgelagerte Pflanze treffen können.

Bei der ebenfalls bevorzugten Ausgestaltung gemäß Anspruch 8 ist die Sensoranordnung als optischer Abstandssensor ausgestaltet, wobei die Sensoranordnung eingerichtet ist, aus der Laufzeit eines Sendestrahls bis zum Empfang des jeweiligen Echopulses einen Abstand zu ermitteln. Solche Sensoranordnungen werden auch als Time-of-Flight-Sensoranordnungen bezeichnet.

Um die statistische Belastbarkeit der ermittelten Bestandsdichte zu erhöhen, wird gemäß Anspruch 9 vorgeschlagen, dass in einem statistischen Verfahren, insbesondere durch Mittelwertbildung, aus mehreren ermittelten Werten ein Gesamtwert für die Bestandsdichte erzeugt wird.

Die Ermittlung des Wertes für die Bestandsdichte erfolgt nach einer Berechnungsvorschrift, die charakteristische Werte für die Pflanzen des betrachteten Feldbestands berücksichtigt. Darunter fallen insbesondere das Volumen der Pflanzen, die Reflektivität der Pflanzen o.dgl.. Wesentlich nach Anspruch 10 ist die Tatsache, dass die Berechnungsvorschrift in Abhängigkeit vom Typ des abzuerntenden Feldbestands auf einer Anzahl gespeicherter Berechnungsvorschriften ausgewählt oder modifiziert wird. Damit lässt sich die Erntemaschine durch eine einfache softwaremäßige Maßnahme auf einen neuen Typ des Abzuerntenden Feldbestands einstellen, ohne dass irgendwelche mechanische Änderungen vorzunehmen sind.

Bei der bevorzugten Ausgestaltung gemäß Anspruch 11 lässt sich die Senderichtung der Sendestrahlen fortlaufend modifizieren. Vorzugsweise handelt es sich bei der Sensoranordnung um einen Laserscanner, der in der Lage ist, den Feldbestand in horizontal ausgerichteten Zeilen abzuscannen.

Aus den Abstandswerten und/oder den Werten für die Bestandsdichte lässt sich gemäß Anspruch 12 eine Bestandshöhe ermitteln. Dies ist beispielweise dadurch möglich, dass die Abstandswerte bei einem stetigen Anheben der zu scannenden Zeilen sprungartig ansteigen, sobald die Kammlinie des Feldbestands erreicht ist. Auf ähnliche Weise kann aus den ermittelten Werten die Lage einer Bestandskante oder die Lage eines Hindernisses ermittelt werden.

Eine besonders vorteilhafte Verwendung der ermittelten Werte für die Bestandsdichte ergibt sich gemäß Anspruch 13 dadurch, dass die ermittelten Werte für die Bestandsdichte mit den von einer Durchsatzmessanordnung ermittelten Werten abgeglichen werden können. Dadurch lässt sich die Genauigkeit der Durchsatzmessanordnung auf besonders einfache Weise steigern.

Die Erntemaschine weist gemäß Anspruch 14 vorzugsweise einen Fahrantrieb und/oder mehrere Arbeitsaggregate auf, der bzw. die mittels der Steuerungsanordnung basierend auf der ermittelten Bestandsdichte angesteuert wird bzw. werden. Bemerkenswert dabei ist die Tatsache, dass mit der vorschlagsgemäßen Ermittlung der Bestandsdichte eine vorausschauende Ansteuerung der betreffenden Komponenten möglich ist, da die Werte für die Bestandsdichte schon vorliegen, noch bevor der Feldbestand von der Erntemaschine eingezogen wird.

Es darf noch darauf hingewiesen werden, dass der Begriff "Bestandsdichte" vorliegend weit zu verstehen ist. Er umfasst jede Angabe, die Aufschluss darüber gibt, welche Pflanzenmenge pro Fläche im Feldbestand vorhanden ist. Dies kann beispielsweise die Anzahl der Pflanzenstängel pro Fläche, das Pflanzenvolumen pro Fläche o.dgl. sein. Der Begriff "Fläche" bezeichnet hier die Fläche des Feldbestands bei einer Draufsicht in vertikaler Richtung.

Nach einer weiteren Lehre gemäß Anspruch 15, der eigenständige Bedeutung zukommt, wird eine Erntemaschine zur Durchführung des vorschlagsgemäßen Verfahrens als solche beansprucht. Auf alle Ausführungen zu dem vorschlagsgemäßen Verfahren, die geeignet sind, die Erntemaschine zu erläutern, darf verwiesen werden.

Im Folgenden wird die Erfindung anhand einer lediglich ein Ausführungsbeispiel darstellenden Zeichnung näher erläutert. In der Zeichnung zeigt
- Fig. 1: eine Erntemaschine zur Durchführung eines vorschlagsgemäßen Verfahrens mit einer Sensoranordnung während dem Abernten eines Feldbestands a) in einer Seitenansicht und b) in einer Draufsicht,
- Fig. 2: den Feldbestand gemäß Fig. 1 in einer Ansicht entlang der Fahrtrichtung der Erntemaschine und
- Fig. 3: a) einen Sendepuls der Sensoranordnung gemäß Fig. 1 und b) der dem Sendepuls zugeordnete, resultierende Echopuls.

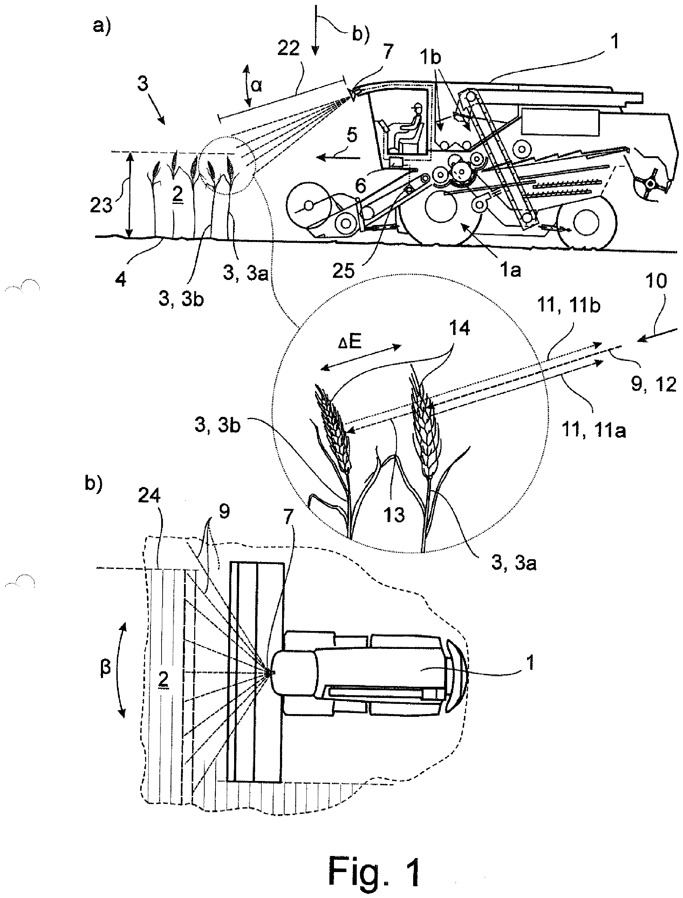

Die in Fig. 1 dargestellte, vorschlagsgemäße Erntemaschine 1 dient dem Abernten eines Feldbestands 2, der aus einer Mehrzahl von Pflanzen 3 besteht. Die Pflanzen 3 des Feldbestands 2 befinden sich auf einem Feldboden 4, wie ebenfalls der Darstellung gemäß Fig. 1 zu entnehmen ist.

Während des Erntebetriebs befindet sich der Feldbestand 2 in Fahrtrichtung 5 der Erntemaschine 1 gesehen vor der Erntemaschine 1. Von der Erntemaschine 1 aus gesehen existieren die vordersten Pflanzen 3a und die bestandsinneren Pflanzen 3b.

Die Erntemaschine 1 weist eine Steuerungsanordnung 6 und eine Sensoranordnung 7 auf, wobei mittels der Sensoranordnung 7 periodisch Sendepulse 8 aus elektromagnetischen Sendestrahlen in mindestens einer Senderichtung 10 auf den Feldbestand 2 ausgesendet werden. Die Sendepulse 8 werden am Feldbestand 2 reflektiert und als Echopulse 11 von der Sensoranordnung 7 empfangen.

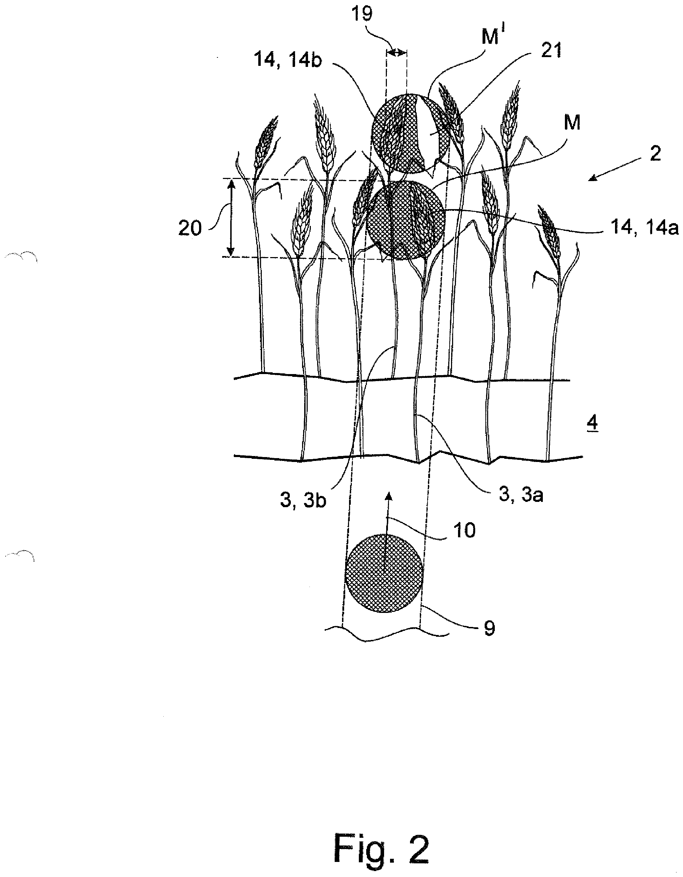

Eine Zusammenschau der Fig. 1 und 2 zeigt, dass für zumindest einen Teil der Sendepulse 8 unterschiedliche Teilstrahlen 12, 13 von in der jeweiligen Senderichtung 10 hintereinander liegenden Pflanzen 3a, 3b des Feldbestands 2 zueinander zeitversetzt reflektiert werden. Der Grund hierfür besteht darin, dass der Teilstrahl 13 in Fig. 1a) verglichen mit dem Teilstrahl 12 einen zusätzlichen Weg, nämlich das zweifache des Wegs ΔE, durchlaufen muss. Der Zeitversatz ergibt sich entsprechend aus der Division des zusätzlichen Wegs durch die Ausbreitungsgeschwindigkeit des Sendestrahls 9.

Fig. 2 zeigt, dass dem Sendestrahl 9 an der Pflanze 3a ein Messfleck zugeordnet ist, der durch den Strahlquerschnitt des Sendestrahls 9 definiert ist. Die Pflanzen 3 des Feldbestands 2 sind hier und vorzugsweise mit Ähren 14 ausgestattet, wobei die Ähre 14a der vorderen Pflanze 3a die Reflexion des ersten Teilstrahls 12 bewirkt, während die Ähre 14b der hinteren Pflanze 3b die Reflexion eines zweiten Teilstrahls 13 bewirkt.

Es darf darauf hingewiesen werden, dass es sich bei der Darstellung des Sendestrahls 9 sowie der Teilstrahlen 12, 13 in der Zeichnung um einen idealisierten Zustand handelt. In einer realen Umgebung ergeben sich meist eine Vielzahl von Teilstrahlen 12, 13 aus ein und demselben Sendestrahl 9, auf die das vorschlagsgemäße Grundprinzip jeweils analog anwendbar ist. Insoweit gelten alle Ausführungen zu den Teilstrahlen 12, 13 für alle anderen, eventuell auftretenden Teilstrahlen entsprechend.

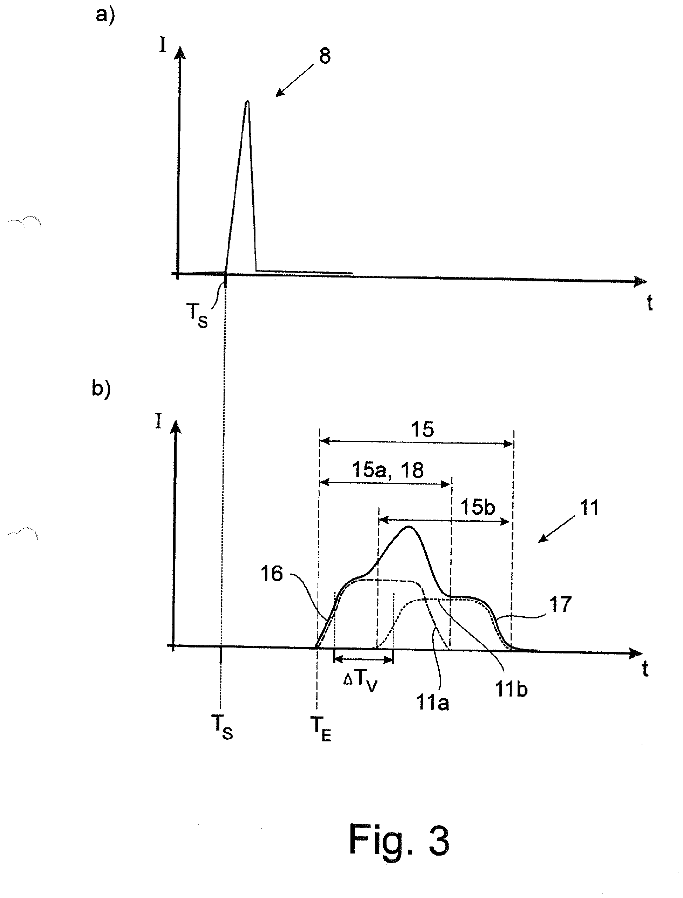

Aus der zeitversetzten Reflexion der Teilstrahlen 12, 13 ergibt sich, dass sich der jeweils resultierende Echopuls 11 aus entsprechend zeitversetzten Teil-Echopulsen 11a, 11b zusammensetzt, wie der Darstellung gemäß Fig. 3 zu entnehmen ist. Dabei zeigt Fig. 3a) zunächst den Sendepuls 8, der von der Sensoranordnung 7 in einer Senderichtung 11 auf den Feldbestand 2 ausgesendet wird. In Fig. 3a) ist der Sendepuls durch seine Strahlleistung I über der Zeit t dargestellt.

Eine entsprechende Darstellung des resultierenden Echopulses 11 findet sich in Fig. 3b). Hier zeigt sich, dass sich der jeweils resultierende Echopuls 11 aus entsprechend zeitversetzten Teil-Echopulsen 11a, 11b zusammensetzt. Bei dem dargestellten und insoweit bevorzugten Ausführungsbeispiel heißt dies, dass sich der resultierende Echopuls 11 aus einer Addition der beiden Teil-Echopulse 11a, 11b ergibt. Der Zeitversatz ΔTv entspricht der oben genannten Zeit, die der Sendestrahl 9 für das zweifache Durchlaufen der Strecke ΔE benötigt. Aus dem in Fig. 3b) gezeigten Verlauf ergibt sich, dass die beiden Teil-Echoimpulse 11a, 11b im Zeitbereich ineinander übergehen. Je nach Struktur des Feldbstands 3 kann es aber auch sein, dass die Teil-Echoimpulse 11a, 11b im Zeitbereich voneinander separiert sind.

Eine Zusammenschau der Fig. 1, 2 und 3 ergibt, dass die Strecke ΔE, die vorliegend auch als "Eindringtiefe" bezeichnet wird, Aufschluss über die Bestandsdichte geben kann. Interessant dabei ist die Tatsache, dass sich die Eindringtiefe ΔE aus dem Zeitversatz ΔTv ableiten lässt. Daher wird zunächst einmal ganz allgemein vorgeschlagen, dass mittels der Steuerungsanordnung 6 basierend auf einem zeitlichen Zusammenhang innerhalb des resultierenden Echopulses 11 ein Wert für die Bestandsdichte ermittelt wird.

In besonders bevorzugter Ausgestaltung handelt es sich bei dem obigen zeitlichen Zusammenhang um den oben angesprochenen Zeitversatz ΔTv zwischen zwei Teil-Echopulsen 11a, 11b, hier und vorzugsweise zwischen dem ersten Teil-Echopuls 11a und dem letzten Teil-Echopuls 11b, die einem Sendepuls 9 zugeordnet sind.

Fig. 3b) zeigt, dass der Zeitversatz ΔTv aus dem resultierenden Echopuls 11 gewissermaßen abgeleitet werden kann. Vorzugsweise ist es so, dass der Zeitversatz ΔTv aus der Pulsbreite 15 des resultierenden Echopulses 11 ermittelt wird, wobei die Pulsbreite15 durch den zeitlichen Abstand zwischen der ersten ansteigenden Pulsflanke 16 und der letzten abfallenden Pulsflanke 17 des Echopulses 11 definiert ist.

Weiter vorzugsweise ist es vorgesehen, dass der Zeitversatz ΔTv ermittelt wird, indem von der Pulsbreite 15 eine Normierungsbreite 18 subtrahiert wird, wobei die Normierungsbreite 18 vorzugsweise definiert ist durch die Pulsbreite 15a des resultierenden Echopulses 11a, die sich bei einer unterstellten Einfachreflexion des Sendestrahls 9 an einer Pflanze 3a des Feldbestands 2 ergeben würde. Bei dem dargestellten und insoweit bevorzugten Ausführungsbeispiel handelt es sich bei der Normierungsbreite 18 also um die Pulsbreite 15a des ersten Teil-Echopulses 11a. Dabei wird der Einfachheit halber unterstellt, dass die Pulsbreiten 15a, 15b der beiden Teil-Echopulse 11a, 11b zueinander identisch sind.

Wie oben angesprochen, lässt sich der Wert für die Bestandsdichte grundsätzlich aus der Eindringtiefe ΔE ermitteln. Vorzugsweise ist es vorgesehen, dass der Wert für die Bestandsdichte ermittelt wird, indem der Kehrwert der Eindringtiefe ΔE des Sendestrahls 9 in den Feldbestand 2 gebildet wird und dass die Eindringtiefe ΔE aus dem Produkt des Zeitversatzes ΔTv mit der Ausbreitungsgeschwindigkeit und ggf. mit einem Normierungsfaktor ermittelt wird. Dieser Kehrwert ist dann noch mit einem Proportionalitätsfaktor zu multiplizieren, um je nach Definition der Bestandsdichte zu dem jeweils gewünschten Wert für die Bestandsdichte zu gelangen.

Fig. 2 zeigt, dass der Strahlquerschnitt des Sendestrahls 9 eine gewisse Mindesterstreckung aufweisen muss, um die vorschlagsgemäße Mehrfachreflexion des Sendestrahls 9 zu ermöglichen. Hier und vorzugsweise ist es so, dass der Sendestrahl 9 an den bezogen auf die jeweilige Senderichtung vordersten Pflanzen 3a einen rundlichen Strahlquerschnitt ausbildet, der einen Durchmesser von mehr als 10 mm, vorzugsweise von mehr als 20 mm, weiter vorzugsweise von mehr als 30 mm, aufweist. Der Begriff "Durchmesser" ist in einem erweiterten Sinne so zu verstehen, dass er bei einem elliptischen Strahlquerschnitt der Länge der Hauptachse des Querschnitts entspricht.

Bei Pflanzen 3 mit länglichen Ähren 14 ist der Messfleck vorzugsweise so ausgelegt, dass der Sendestrahl 9 an der betreffenden Ähre 14 vorbeistrahlen kann. Im Einzelnen ist es vorzugsweise so, dass die Pflanzen 3 längliche Ähren 14 mit einer mittleren Breitenerstreckung 19 ausbilden, wobei dem Sendestrahl 9 an den Ähren 14 der bezogen auf die jeweilige Senderichtung 10 vordersten Pflanzen 3a auf Grund seines Strahlquerschnitts ein Messfleck M zugeordnet ist, dessen Durchmesser 20 zumindest in einer Richtung größer, insbesondere um das mindestens zweifache größer, als die Breitenerstreckung 19 der Ähren 14 ist. Dieser Zusammenhang ist in Fig. 2 schematisch angedeutet. Fig. 2 zeigt weiter, dass der Messfleck M' im Bereich der bestandsinneren Pflanze 3b einen ausgenommenen Bereich 21 ausbildet, der sich aus der Reflexion des Teilstrahls 12, also durch die resultierende Abstrahlung, ergibt.

Für die Auslegung der Sensoranordnung 7 sind verschiedene vorteilhafte Varianten denkbar. Hier und vorzugsweise ist es so, dass die elektromagnetischen Strahlen optische Strahlen, insbesondere Laserstrahlen, sind, deren Senderichtung 10 mittels der Steuerungsanordnung 6 einstellbar ist. In besonders bevorzugter Ausgestaltung handelt es sich bei der Sensoranordnung 7 um einen Laserscanner, der den Feldbestand 2 in horizontal ausgerichteten Zeilen abscannt. Hierfür lässt sich der Neigungswinkel α des Sendestrahls 9 um die Horizontale und der Scanwinkel β um die Vertikale mittels der Steuerungsanordnung 6 einstellen.

Vorzugsweise ist die Sensoranordnung 7 als optischer Abstandssensor ausgestaltet, wobei mittels der Sensoranordnung 7 aus dem zeitlichen Abstand des Sendezeitpunkts T_{S} eines Sendepulses 8 zu dem Empfangszeitpunkt T_{E} des zugeordneten Echopulses 11 ein Abstandswert 22 zwischen der Sensoranordnung 7 und der jeweils reflektierenden Pflanze 3a ermittelt wird. Wie weiter oben angesprochen, handelt es sich bei der Sensoranordnung 7 vorzugsweise um eine Time-of-Flight-Sensoranordnung.

Bis hierhin betrifft das vorschlagsgemäße Verfahren die Ermittlung eines Wertes für die Bestandsdichte des Feldbestands 2. Vorzugsweise ist es allerdings so, dass eine Vielzahl von Werten für die Bestandsdichte ermittelt werden, insbesondere dass der Wert für die Bestandsdichte für jeden Sendepuls 8 oder für jeden Sendepuls 8 einer Gruppe von Sendepulsen 8 ermittelt wird. Hier und vorzugsweise ist es dabei vorgesehen, dass die ermittelten Werte für die Bestandsdichte in einem statistischen Verfahren, insbesondere durch Mittelwertbildung, in einen Gesamtwert für die Bestandsdichte überführt werden.

Eine besonders hohe Flexibilität für die Erntemaschine 1 im Hinblick auf das Abernten von Feldbeständen 2 unterschiedlichen Typs wird dadurch erreicht, dass der Wert für die Bestandsdichte nach einer Berechnungsvorschrift ermittelt wird und dass die Steuerungsanordnung 6 eingerichtet ist, in Abhängigkeit vom Typ des abzuerntenden Feldbestands 2 die der Ermittlung der Bestandsdichte zu Grunde liegende Berechnungsvorschrift aus einer Anzahl gespeicherter Berechnungsvorschriften auszuwählen oder zu modifizieren. Wie weiter oben angesprochen, ist damit eine Umstellung der Erntemaschine 1 auf unterschiedliche Typen von Feldbeständen 2 möglich, ohne dass eine mechanische Anpassung vorgenommen werden muss.

Es wurde bereits darauf hingewiesen, dass es sich bei der Sensoranordnung 7 vorzugsweise um einen Laserscanner handelt. Dann ist es vorzugsweise so, dass die Senderichtung 10 der Sensoranordnung 7 mittels der Steuerungsanordnung 6 fortlaufend in horizontaler Richtung und/oder in vertikaler Richtung modifiziert wird. Bevorzugt ist dabei ein ebenfalls bereits angesprochenes, zeilenweises "Abtasten" des Feldbestands 2.

In besonders bevorzugter Ausgestaltung ist es vorgesehen, dass mittels der Steuerungsanordnung 6 aus den Abstandswerten und/oder den Werten für die Bestandsdichte eine Bestandshöhe 23 ermittelt wird. Im Falle des oben angesprochenen Laserscanners ist dabei ein zeilenweises Abtasten des Feldbestands 2 vorgesehen, wobei der Neigungswinkel α zunehmend flacher gewählt wird. Beim Erreichen der oberen Kammlinie des Feldbestands 2 ändern sich nicht nur die oben angesprochenen Abstandswerte, sondern auch die Werte für die Bestandsdichte sprunghaft, woraus sich die Lage der Kammlinie automatisiert erfassen lässt.

Alternativ oder zusätzlich kann es vorgesehen sein, dass mittels der Steuerungsanordnung 6 aus den Abstandswerten und/oder den Werten für die Bestandsdichte die Lage einer seitlichen Bestandskante 24 ermittelt wird. Auch dies lässt sich durch die automatisierte Erfassung einer sprunghaften Änderung in den betreffenden Werten bewerkstelligen.

Alternativ oder zusätzlich ist es weiter vorgesehen, dass mittels der Steuerungsanordnung 6 aus den Abstandswerten und/oder den Werten für die Bestandsdichte die Lage eines Hindernisses ermittelt wird. Auch diese Ermittlung lässt sich auf die automatisierte Erfassung einer sprunghaften Änderung der betreffenden Werte zurückführen.

Der vorschlagsgemäße Wert für die Bestandsdichte des Feldbestands 2 lässt sich vorteilhaft für eine vorausschauende Ansteuerung der Erntemaschine 1 einsetzen. Grundsätzlich ist es aber auch denkbar, dass die ermittelte Bestandsdichte dazu dient, eine sensorgestützte Prozessüberwachung innerhalb der Erntemaschine 1 zu optimieren. In diesem Zusammenhang wird vorgeschlagen, dass die Erntemaschine 1 eine Durchsatzmessanordnung 25, insbesondere eine Schichthöhenmessanordnung zur Ermittlung eines Durchsatzes, aufweist und dass mittels der Steuerungsanordnung 6 der ermittelte Durchsatz mit der ermittelten Bestandsdichte abgeglichen wird. Dies bedeutet, dass von dem ermittelten Wert für die Bestandsdichte unter Berücksichtigung der Fahrgeschwindigkeit der Erntemaschine 1 ein Wert für den zu erwartenden Durchsatz berechnet wird und dass dieser berechnete Durchsatz mit dem von der Durchsatzmessanordnung 25 gemessenem Durchsatz abgeglichen wird. Der Begriff "Abgleich" bedeutet hier, dass eine Abweichung der sich gegenüberstehenden Durchsätze in einer entsprechenden Korrektur der Durchsatzmessanordnung 25 oder der Sensoranordnung 7 resultiert. Eine solche Korrektur kann beispielsweise durch einen Korrekturfaktor umgesetzt sein, mit dem der jeweils ermittelte Durchsatz multipliziert wird, um zu dem korrigierten Durchsatz zu gelangen.

Es darf abschließend darauf hingewiesen werden, dass die Erntemaschine einen Fahrantrieb 1a und/oder mehrere Arbeitsaggregate 1b aufweist, wobei der Fahrantrieb 1a und/oder die Arbeitsaggregate 1b mittels der Steuerungsanordnung 6 basierend auf der ermittelten Bestandsdichte angesteuert wird bzw. werden. Ein besonderer Vorteil dieser Art der Ansteuerung der beteiligten Komponenten besteht darin, dass die Ansteuerung vorausschauend vorgenommen wird, derart, dass erste Maßnahmen zur Ansteuerung bereits getroffen werden können, noch bevor der Feldbestand 2 in die Erntemaschine 1 eingezogen wird.

Nach einer weiteren Lehre, der eigenständige Bedeutung zukommt, wird die obige Erntemaschine 1 als solche beansprucht, soweit diese für die Durchführung des vorschlagsgemäßen Verfahrens geeignet ist. Insoweit darf auf alle Ausführungen zu dem vorschlagsgemäßen Verfahren verwiesen werden.

Es darf abschließend noch darauf hingewiesen werden, dass mit der vorschlagsgemäßen Lösung neben der Bestandsdichte auch andere Umgebungsbedingungen ermittelt werden können, beispielsweise die Struktur des Feldbestands 2, die Kontur des Feldbestands 2, die Permeabilität der Pflanzen 3 o. dgl.

### Bezugszeichenliste

- 1: Erntemaschine
- 1a: Fahrantrieb
- 1b: Arbeitsaggregate
- 2: Pflanzen
- 3: Feldbestand
- 3a: vordere Pflanzen
- 3b: hinteren Pflanzen
- 4: Feldboden
- 5: Fahrtrichtung
- 6: Steuerungsanordnung
- 7: Sensoranordnung
- 8: Sendepulse
- 9: Sendestrahl
- 10: Senderichtung
- 11: Echopuls
- 11a: Teil-Echopuls
- 11b: Teilechopuls
- 12, 13: Teilstrahlen
- M: Messfleck vorne
- M': Messfleck hinten
- 14: Ähre
- 14a: vordere Ähre
- 14b: hintere Ähre
- 15: Pulsbreite
- 15a: Pulsbreite
- 15b: Pulsbreite
- 16: Pulsflanke
- 17: letzte abfallende Pulsflanke
- 18: Normierungsbreite
- 19: Breitenerstreckung
- 20: Durchmesser
- 21: ausgenommener Bereich
- 22: Abstandswert
- 23: Bestandshöhe
- 24: Bestandskante
- 25: Durchsatzmessanordnung

## Patentansprüche

1. Verfahren zur Ermittlung der Bestandsdichte eines von einer Erntemaschine (1) abzuerntenden Feldbestands (2) aus einer Mehrzahl von Pflanzen (3), wobei die Erntemaschine (1) eine Steuerungsanordnung (6) und eine Sensoranordnung (7) aufweist, wobei mittels der Sensoranordnung (7) periodisch Sendepulse (8) aus elektromagnetischen Sendestrahlen (9) in mindestens einer Senderichtung (10) auf den Feldbestand (2) ausgesendet werden, wobei die Sendepulse (8) am Feldbestand (2) reflektiert und als Echopulse (11) von der Sensoranordnung (7) empfangen werden,
**dadurch gekennzeichnet,**
**dass** für zumindest einen Teil der Sendepulse (8) unterschiedliche Teilstrahlen (12, 13) ein und desselben Sendestrahls (9) von in der jeweiligen Senderichtung (10) hintereinanderliegenden Pflanzen (3) des Feldbestands (2) zueinander zeitversetzt reflektiert werden, so dass sich der jeweils resultierende Echopuls (11) aus entsprechend zeitversetzten Teil-Echopulsen (11a, 11b) zusammensetzt, und dass mittels der Steuerungsanordnung (6) basierend auf einem zeitlichen Zusammenhang innerhalb des resultierenden Echopulses (11) ein Wert für die Bestandsdichte ermittelt wird. wobei .
der zeitliche Zusammenhang ein Zeitversatz zwischen zwei Teil-Echopulsen (11a, 11b), insbesondere zwischen dem ersten Teil-Echopuls (11a) und dem letzten Teil-Echopuls (11b), ist, die einem Sendepuls (8) zugeordnet sind, und
der Zeitversatz ΔT_{V} aus der Pulsbreite (15) des resultierenden Echopulses (11) ermittelt wird und dass die Pulsbreite (15) durch den zeitlichen Abstand zwischen der ersten ansteigenden Pulsflanke (16) und der letzten abfallenden Pulsflanke (17) des Echopulses (11) definiert ist.

2. Verfahren nach Anspruch 1, **dadurch gekennzeichnet, dass** der Zeitversatz ΔT_{V} ermittelt wird, indem von der Pulsbreite (15) eine Normierungsbreite (18) subtrahiert wird, und dass die Normierungsbreite (18) definiert ist durch die Pulsbreite (15a) des resultierenden Echopulses (11), die sich bei einer unterstellten Einfachreflexion des Sendestrahls (9) an einer Pflanze (3a) des Feldbestands (2) ergeben würde.

3. Verfahren nach einem der vorhergehenden Ansprüche, **dadurch gekennzeichnet, dass** der Wert für die Bestandsdichte ermittelt wird, indem der Kehrwert einer Eindringtiefe ΔE des Sendestrahls (9) in den Feldbestand (2) gebildet wird und dass die Eindringtiefe ΔE aus dem Produkt des Zeitversatzes ΔT_{V} mit der Ausbreitungsgeschwindigkeit und ggf. mit einem Normierungsfaktor ermittelt wird.

4. Verfahren nach einem der vorhergehenden Ansprüche, **dadurch gekennzeichnet, dass** der Sendestrahl (9) an den bezogen auf die jeweilige Senderichtung (10) vordersten Pflanzen (3a) einen rundlichen Strahlquerschnitt ausbildet, der einen Durchmesser von mehr als 10mm, vorzugsweise von mehr als 20mm, weiter vorzugsweise von mehr als 30mm, aufweist.

5. Verfahren nach einem der vorhergehenden Ansprüche, **dadurch gekennzeichnet, dass** die Pflanzen (3) längliche Ähren (14) mit einer mittleren Breitenerstreckung (19) ausbilden und dass dem Sendestrahl (9) an den Ähren (14) der bezogen auf die jeweilige Senderichtung (10) vordersten Pflanzen (3a) aufgrund seines Strahlquerschnitts ein Messfleck M zugeordnet ist, dessen Durchmesser (20) zumindest in einer Richtung größer, insbesondere um das mindestens Zweifache größer, als die Breitenerstreckung (19) der Ähren (14) ist.

6. Verfahren nach einem der vorhergehenden Ansprüche, **dadurch gekennzeichnet, dass** die Sensoranordnung (7) als optischer Abstandssensor ausgestaltet ist, und dass mittels der Sensoranordnung (7) aus dem zeitlichen Abstand des Sendezeitpunkts Tₛ eines Sendepulses (8) zu dem Empfangszeitpunkt T_{E} des zugeordneten Echopulses (11) ein Abstandswert (22) zwischen der Sensoranordnung (7) und der jeweils reflektierenden Pflanze (3) ermittelt wird.

7. Verfahren nach einem der vorhergehenden Ansprüche, **dadurch gekennzeichnet, dass** der Wert für die Bestandsdichte für jeden Sendepuls (8) oder für jeden Sendepuls (8) einer Gruppe von Sendepulsen (8) ermittelt wird und dass die ermittelten Werte für die Bestandsdichte in einem statistischen Verfahren, insbesondere durch Mittelwertbildung, in einen Gesamtwert für die Bestandsdichte überführt werden.

8. Verfahren nach einem der vorhergehenden Ansprüche, **dadurch gekennzeichnet, dass** der Wert für die Bestandsdichte nach einer Berechnungsvorschrift ermittelt wird und dass die Steuerungsanordnung (6) eingerichtet ist, in Abhängigkeit vom Typ des abzuerntenden Feldbestands (2) die der Ermittlung der Bestandsdichte zugrundeliegende Berechnungsvorschrift aus einer Anzahl gespeicherter Berechnungsvorschriften auszuwählen oder zu modifizieren.

9. Verfahren nach einem der vorhergehenden Ansprüche, **dadurch gekennzeichnet, dass** die Senderichtung (10) der Sensoranordnung (7) mittels der Steuerungsanordnung (6) fortlaufend in horizontaler Richtung und/oder in vertikaler Richtung modifiziert wird.

10. Verfahren nach einem der vorhergehenden Ansprüche, **dadurch gekennzeichnet, dass** mittels der Steuerungsanordnung (6) aus den Abstandswerten und/oder den Werten für die Bestandsdichte eine Bestandshöhe (23) ermittelt wird, und/oder, dass mittels der Steuerungsanordnung (6) aus den Abstandswerten und/oder den Werten für die Bestandsdichte die Lage einer Bestandskante (24) ermittelt wird, und/oder, dass mittels der Steuerungsanordnung (6) aus den Abstandswerten und/oder den Werten für die Bestandsdichte die Lage eines Hindernisses ermittelt wird.

11. Verfahren nach einem der vorhergehenden Ansprüche, **dadurch gekennzeichnet, dass** die Erntemaschine (1) eine Durchsatzmessanordnung (25), insbesondere eine Schichthöhenmessanordnung zur Ermittlung eines Durchsatzes, aufweist und dass mittels der Steuerungsanordnung (6) der ermittelte Durchsatz mit der ermittelten Bestandsdichte abgeglichen wird.

12. Verfahren nach Anspruch 11, **dadurch gekennzeichnet, dass** die Erntemaschine (1) einen Fahrantrieb (1a) und/oder mehrere Arbeitsaggregate (1b) aufweist und dass der Fahrantrieb (1a) und/oder die Arbeitsaggregate (1b) mittels der Steuerungsanordnung (6) basierend auf der ermittelten Bestandsdichte angesteuert wird bzw. werden.

## Claims

1. Method for determining the crop density of a field crop (2) to be harvested by a harvesting machine (1) from a plurality of plants (3), wherein the harvesting machine (1) has a control arrangement (6) and a sensor arrangement (7), wherein transmission pulses (8) consisting of electromagnetic transmission beams (9) are periodically emitted onto the crop (2) in at least one transmission direction (10) by means of the sensor arrangement (7), wherein the transmission pulses (8) are reflected at the crop (2) and are received as echo pulses (11) by the sensor arrangement (7),
**characterised in that**
for at least some of the transmission pulses (8), different partial beams (12, 13) of one and the same transmission beam (9) from plants (3) of the field crop (2) lying one behind the other in the respective transmission direction (10) are reflected with a time delay relative to one another, so that the respective resulting echo pulse (11) is composed of correspondingly time-shifted partial echo pulses (11a, 11b), and that a value for the crop density is determined by means of the control arrangement (6) based on a temporal relationship within the resulting echo pulse (11), wherein
the temporal relationship is a time offset between two partial echo pulses (11a, 11b), in particular between the first partial echo pulse (11a) and the last partial echo pulse (11b), which are associated with a transmission pulse (8), and
the time offset ΔT_{V} is determined from the pulse width (15) of the resulting echo pulse (11) and that the pulse width (15) is defined by the time interval between the first rising pulse edge (16) and the last falling pulse edge (17) of the echo pulse (11).

2. Method according to claim 1, **characterised in that** the time offset ΔT_{V} is determined by subtracting a normalisation width (18) from the pulse width (15), and **in that** the normalisation width (18) is defined by the pulse width (15a) of the resulting echo pulse (11), which would result from an assumed single reflection of the transmitted beam (9) at a plant (3a) of the field crop (2).

3. Method according to one of the preceding claims, **characterised in that** the value for the population density is determined by forming the reciprocal value of a penetration depth ΔE of the transmitted beam (9) into the field population (2) and **in that** the penetration depth ΔE is determined
from the product of the time offset ΔT_{V} with the propagation velocity and, if appropriate, with a normalisation factor.

4. Method according to one of the preceding claims, **characterised in that** the transmitting beam (9) forms a roundish beam cross-section at the foremost plants (3a) in relation to the respective transmitting direction (10), which has a diameter of more than 10 mm, preferably more than 20 mm, more preferably more than 30 mm.

5. Method according to one of the preceding claims, **characterised in that** the plants (3) form elongate spikes (14) with an average width extension (19) and **in that** a measuring spot M is assigned to the transmitting beam (9) on the spikes (14) of the foremost plants (3a) in relation to the respective transmitting direction (10) on the basis of its beam cross-section, the diameter (20) of which spot is larger, in particular at least twice larger, than the width extension (19) of the spikes (14) at least in one direction.

6. Method according to one of the preceding claims, **characterised in that** the sensor arrangement (7) is designed as an optical distance sensor, and **in that** a distance value (22) between the sensor arrangement (7) and the respective reflecting plant (3) is determined
by means of the sensor arrangement (7) from the time interval between the transmission time Tₛ of a transmission pulse (8) and the reception time T_{E} of the associated echo pulse (11).

7. Method according to one of the preceding claims, **characterised in that** the value for the population density is determined for each transmission pulse (8) or for each transmission pulse (8) of a group of transmission pulses (8) and **in that** the determined values for the population density are converted into an overall value for the population density in a statistical method, in particular by averaging.

8. Method according to one of the preceding claims, **characterised in that** the value for the crop density is determined according to a calculation rule and **in that** the control arrangement (6) is set up to select or modify the calculation rule on which the determination of the crop density is based from a number of stored calculation rules as a function of the type of field crop (2) to be harvested.

9. Method according to one of the preceding claims, **characterised in that** the transmission direction (10) of the sensor arrangement (7) is continuously modified in the horizontal direction and/or in the vertical direction by means of the control arrangement (6).

10. Method according to one of the preceding claims, **characterised in that** a crop height (23) is determined from the distance values and/or the values for the crop density by means of the control arrangement (6), and/or **in that** the position of a crop edge (24) is determined from the distance values and/or the values for the crop density by means of the control arrangement (6), and/or **in that** the position of an obstacle is determined from the distance values and/or the values for the crop density by means of the control arrangement (6).

11. Method according to one of the preceding claims, **characterised in that** the harvester (1) has a throughput measuring arrangement (25), in particular a layer height measuring arrangement for determining a throughput, and **in that** the determined throughput is compared with the determined crop density by means of the control arrangement (6).

12. Method according to claim 11, **characterised in that** the harvesting machine (1) has a traction drive (1a) and/or a plurality of working units (1b) and **in that** the traction drive (1a) and/or the working units (1b) is/are controlled by means of the control arrangement (6) based on the determined crop density.

## Revendications

1. Procédé de détermination de la densité de culture d'une culture en champ (2) à récolter par une machine de récolte (1) à partir d'une pluralité de plantes (3), la machine de récolte (1) comportant un agencement de commande (6) et un agencement de capteur (7), des impulsions d'émission (8) constituées de faisceaux d'émission électromagnétiques (9) étant émis périodiquement au moyen de l'agencement de capteur (7) dans au moins une direction d'émission (10) vers la culture en champ (2), les impulsions d'émission (8) étant réfléchies au niveau de la culture en champ (2) et reçues par l'agencement de capteur (7) sous forme d'impulsions d'écho (11),
**caractérisé en ce que,**
pour au moins une partie des impulsions d'émission (8), différents faisceaux partiels (12, 13) d'un seul et même faisceau d'émission (9) sont réfléchis avec un décalage temporel les uns par rapport aux autres par des plantes (3) de la culture en champ (2) disposées les unes derrière les autres dans la direction d'émission respective (10), de sorte que l'impulsion d'écho résultante respective (11) se compose d'impulsions d'écho partielles (11a, 11b) avec un décalage temporel correspondant, et **en ce qu'**au moyen de l'agencement de commande (6), une valeur pour la densité de culture est déterminée sur la base d'une relation temporelle à l'intérieur de l'impulsion d'écho résultante (11),
la relation temporelle étant un décalage temporel entre deux impulsions d'écho partielles (11a, 11b), en particulier entre la première impulsion d'écho partielle (11a) et la dernière impulsion d'écho partielle (11b) qui est associée à une impulsion d'émission (8), et
le décalage temporel ΔTᵥ étant déterminé à partir de la largeur d'impulsion (15) de l'impulsion d'écho résultante (11), et **en ce que** la largeur d'impulsion (15) est définie par la distance temporelle entre le premier flanc d'impulsion ascendant (16) et le dernier flanc d'impulsion descendant (17) de l'impulsion d'écho (11).

2. Procédé selon la revendication 1, **caractérisé en ce que** le décalage temporel ΔTᵥ est déterminé par le fait qu'une largeur de normation (18) est soustraite de la largeur d'impulsion (15), et **en ce que** la largeur de normation (18) est définie par la largeur d'impulsion (15a) de l'impulsion d'écho résultante (11) qui serait obtenue en cas de réflexion simple supposée du faisceau d'émission (9) au niveau d'une plante (3a) de la culture en champ (2).

3. Procédé selon une des revendications précédentes, **caractérisé en ce que** la valeur pour la densité de culture est déterminée par le fait que la valeur réciproque d'une profondeur de pénétration ΔE du faisceau d'émission (9) dans la culture en champ (2) est formée, et **en ce que** la profondeur de pénétration ΔE est déterminée à partir du produit du décalage temporel ΔTᵥ avec la vitesse de propagation et le cas échéant avec un facteur de normation.

4. Procédé selon une des revendications précédentes, **caractérisé en ce que** le faisceau d'émission (9) vers les plantes (3a) les plus en avant par rapport à la direction d'émission respective (10) forme une section transversale de faisceau ronde qui présente un diamètre de plus de 10 mm, préférentiellement de plus de 20 mm, plus préférentiellement de plus de 30 mm.

5. Procédé selon une des revendications précédentes, **caractérisé en ce que** les plantes (3) forment des épis allongés (14) avec une extension en largeur moyenne (19), et **en ce qu'**au faisceau d'émission (9) est associé, au niveau des épis (14) des plantes (3a) les plus en avant par rapport à la direction d'émission respective (10), en raison de sa section transversale de faisceau, un spot de mesure M dont le diamètre (20) au moins dans une direction est supérieur, en particulier supérieur au moins du double, à l'extension en largeur (19) des épis (14).

6. Procédé selon une des revendications précédentes, **caractérisé en ce que** l'agencement de capteur (7) est conformé en capteur de distance optique, et **en ce qu'**au moyen de l'agencement de capteur (7), une valeur de distance (22) entre l'agencement de capteur (7) et la plante respectivement réfléchissante (3) est déterminée à partir de la distance temporelle du moment d'émission Tₛ d'une impulsion d'émission (8) par rapport au moment de réception T_{E} de l'impulsion d'écho associée (11).

7. Procédé selon une des revendications précédentes, **caractérisé en ce que** la valeur pour la densité de culture est déterminée pour chaque impulsion d'émission (8) ou pour chaque impulsion d'émission (8) d'un groupe d'impulsions d'émission (8) et **en ce que** les valeurs déterminées pour la densité de culture sont converties dans un procédé statistique, en particulier par formation de moyennes, en une valeur globale pour la densité de culture.

8. Procédé selon une des revendications précédentes, **caractérisée en ce que** la valeur pour la densité de culture est déterminée selon une règle de calcul et **en ce que** l'agencement de commande (6) est agencé pour sélectionner ou modifier, en fonction du type de la culture en champ (2) à récolter, la règle de calcul servant de base à la détermination de la densité de culture à partir d'un nombre de règles de calcul mémorisées.

9. Procédé selon une des revendications précédentes, **caractérisé en ce qu'**au moyen de l'agencement de commande (6), la direction d'émission (10) de l'agencement de capteur (7) est modifiée en permanence dans la direction horizontale et/ou dans la direction verticale.

10. Procédé selon une des revendications précédentes, **caractérisé en ce qu'**au moyen de l'agencement de commande (6), une hauteur de culture (23) est déterminée à partir des valeurs de distance et/ou des valeurs pour la densité de culture, et/ou **en ce qu'**au moyen de l'agencement de commande (6), la position d'un bord de culture (24) est déterminée à partir des valeurs de distance et/ou des valeurs pour la densité de culture, et/ou **en ce qu'**au moyen de l'agencement de commande (6), la position d'un obstacle est déterminée à partir des valeurs de distance et/ou des valeurs pour la densité de culture.

11. Procédé selon une des revendications précédentes, **caractérisé en ce que** la machine de récolte (1) comporte un agencement de mesure de débit (25), en particulier un agencement de mesure de hauteur de couche pour déterminer un débit, et **en ce qu'**au moyen de l'agencement de commande (6), le débit déterminé est comparé avec la densité de culture déterminée.

12. Procédé selon la revendication 11, **caractérisé en ce que** la machine de récolte (1) comporte un système d'avancement (1a) et/ou plusieurs organes de travail (1b), et **en ce que** le système d'avancement (1a) et/ou les organes de travail (1b) est, respectivement sont commandé(s) au moyen de l'agencement de commande (6) sur la base de la densité de culture déterminée.
